# EUROPEAN PATENT APPLICATION

(11) **EP 3 125 163 A1**
(43) Date of publication of application: **01.02.2017**
(21) Application number: 16181535.2
(22) Date of filing: 27.07.2016
(51) Int. Cl.: G06Q 10/00, G06Q 10/08

(54) **METHOD AND DEVICE FOR FLIGHT NOTIFICATION, AND METHOD AND DEVICE FOR FLIGHT SETTING**

(30) Priority: 31.07.2015 CN 201510463639
(71) Applicant: Xiaomi Inc., Beijing 100085 (CN)
(72) Inventor: WU, Liangxiong, Haidian District, Beijing 100085 (CN); ZHANG, Liang, Haidian District, Beijing 100085 (CN); LIU, Ming, Haidian District, Beijing 100085 (CN)
(74) Representative: Loustalan, Paul William

(57) **Abstract**

The present disclosure relates to a method and a device for flight notification and a method and a device for flight setting. The method for flight notification includes: receiving (110) flight setting information which includes a flight of a user and at least one contact of the user; monitoring (120) flight information corresponding to the flight of the user provided by an airline server; upon the flight information indicating that there is a change in the flight of the user, generating (130) a flight change notification according to a change in information of the flight information, wherein the flight change notification includes the change information; and sending (140) the flight change notification to the at least one contact of the user.

## Description

### TECHNICAL FIELD

The present disclosure generally relates to the technical field of network communication, and more particularly, to a method and a device for flight notification and a method and a device for flight setting.

### BACKGROUND

With the continuous developments of network communication technologies, smart phones get increasingly wide applications. However, in some particular cases, for example, on a plane, the smart phones have to be turned off. If there are changes in the flight taken by a user, the user cannot timely notify the user's contact (for example, the person who is going to pick up the user) of the changes. Thus, how to make the contact of the user know the change information of the user's flight when the user's flight changes becomes an important problem. In related arts, the contact of the user may subscribe the flight information of the user by software developed by airline companies, or know the flight information of the user by large screens at the airport. However, if there are changes in the user's flight, and the contact of the user does not download the software developed by the airline companies or does not watch the large screens at the airport, the contact cannot timely know the change information of the user's flight.

### SUMMARY

The present disclosure provides a method and a device for flight notification and a method and a device for flight setting in order to solve the problem in the related arts that when there are changes in user's flight, the user cannot timely notify the user's contact of the changes, and the user's contact needs to obtain the change information on his/her own initiative, thereby resulting in reduced user experience and satisfaction.

According to a first aspect of embodiments of the present disclosure, there is provided a method for flight notification, including:
receiving flight setting information which includes a flight of a user and at least one contact of the user;
monitoring flight information corresponding to the flight of the user provided by an airline server;
upon the flight information indicating that there is a change in the flight of the user, generating a flight change notification according to a change in information of the flight information, wherein the flight change notification includes the change in information; and
sending the flight change notification to the at least one contact of the user.
Optionally, the flight setting information further includes a placeholder;
the step of generating the flight change notification according to the change in information of the flight information includes:
   filling the placeholder in the flight setting information correspondingly according to the change in information of the flight information to generate the flight change notification.

Optionally, when the flight information indicates that there is the change in the flight of the user, the step of generating the flight change notification according to the change information in the flight information, includes:
upon the flight information indicating that an arrival time of the flight of the user exceeds a predetermined arrival time, generating the flight change notification according to the arrival time of the flight of the user, wherein the flight change notification includes the changed arrival time; or
upon the flight information indicating that the flight of the user encounters a malfunction, generating the flight change notification according to malfunction information in the flight information, wherein the flight change notification includes the malfunction information; or
upon the flight information indicating that the flight of the user needs to land at an airport other than a predetermined airport, generating the flight change notification according to airport change information in the flight information, wherein the flight change notification includes a name of the airport where the flight is about to land and a landing time.

Optionally, the step of monitoring flight information corresponding to the flight of the user provided by the airline server, includes:
establishing a connection with the airline server according to the flight setting information; and
monitoring the flight information corresponding to the flight of the user provided by the airline server in real time.

Optionally, the step of sending the flight change notification to the at least one contact of the user includes at least one of:
sending the flight change notification to the at least one contact of the user via a short message;
sending the flight change notification to the at least one contact of the user via an email; or
sending the flight change notification to the at least one contact of the user via an instant messaging application.

Optionally, the method further includes:
upon the flight information indicating that there is no change in the flight of the user, deleting the flight setting information.

According to a second aspect of embodiments of the present disclosure, there is provided a method for flight setting, including:
determining whether flight setting information is received, wherein the flight setting information includes a flight of a user and at least one contact of the user; and
upon determining that the flight setting information is received, sending the flight setting information to a user server, so that the user server monitors flight information corresponding to the flight of the user provided by an airline server.

Optionally, the step of determining whether the flight setting information is received includes:
determining whether a setting instruction with respect to a flight change notification is received;
upon the setting instruction with respect to the flight change notification being received, obtaining at least one flight change notification template according to the setting instruction; and
receiving an editing instruction for the or each flight change notification template, and generating the flight setting information according to the editing instruction.

Optionally, the or each flight change notification template includes a reserved placeholder in which flight information corresponding to the flight of the user is to be filled.

Optionally, the sending the flight setting information to the user server includes at least one of:
sending the flight setting information to the user server via a short message;
sending the flight setting information to the user server via an email; or
sending the flight setting information to the user server via an instant messaging application.

According to a third aspect of embodiments of the present disclosure, there is provided a device for flight notification, including:
a receiving module configured to receive flight setting information which includes a flight of a user and at least one contact of the user;
a monitoring module configured to monitor flight information corresponding to the flight of the user provided by an airline server;
a change notification generating module configured to, upon the flight information indicating that there is a change in the flight of the user, generate a flight change notification according to change information in the flight information, wherein the flight change notification includes the change information; and
a sending module configured to send the flight change notification to the at least one contact of the user.

Optionally, the flight setting information further includes a placeholder;
the change notification generating module includes:
a filling submodule configured to fill the placeholder in the flight setting information correspondingly according to the change information in the flight information to generate the flight change notification.

Optionally, the change notification generating module includes:
a first change notification generating submodule configured to, upon the flight information indicating that an arrival time of the flight of the user exceeds a predetermined arrival time, generate the flight change notification according to the arrival time of the flight of the user, wherein the flight change notification includes the changed arrival time; or
a second change notification generating submodule configured to, upon the flight information indicating that the flight of the user encounters a malfunction, generate the flight change notification according to malfunction information in the flight information, wherein the flight change notification includes the malfunction information; or
a third change notification generating submodule configured to, upon the flight information indicating that the flight of the user needs to land at an airport other than a predetermined airport, generate the flight change notification according to airport change information in the flight information, wherein the flight change notification includes a name of the airport where the flight is about to land and a landing time.

Optionally, the monitoring module includes:
a connection submodule configured to establish a connection with the airline server according to the flight setting information; and
a monitoring submodule configured to monitor the flight information corresponding to the flight of the user provided by the airline server in real time.

Optionally, the sending module employs at least one of the following sending manners:
sending the flight change notification to the at least one contact of the user via a short message;
sending the flight change notification to the at least one contact of the user via an email; or
sending the flight change notification to the at least one contact of the user via an instant messaging application.

Optionally, the device further includes:
a deletion module configured to, when the flight information indicates that there is no change in the flight of the user, delete the flight setting information.

According to a fourth aspect of embodiments of the present disclosure, there is provided a device for flight setting, including:
a determination module configured to determine whether flight setting information is received, wherein the flight setting information includes a flight of a user and at least one contact of the user; and
a sending module configured to, upon determining that the flight setting information is received, send the flight setting information to a user server, so that the user server monitors flight information corresponding to the flight of the user provided by an airline server.

Optionally, the determination module includes:
a determination submodule configured to determine whether a setting instruction with respect to a flight change notification is received;
an obtaining submodule configured to, upon the setting instruction with respect to the flight change notification being received, obtain at least one flight change notification template according to the setting instruction; and
a setting information generating submodule configured to receive an editing instruction for the or each flight change notification template, and generate the flight setting information according to the editing instruction.

Optionally, the or each flight change notification template includes a reserved placeholder in which flight information corresponding to the flight of the user is to be filled.

Optionally, the sending module employs at least one of the following sending manners:
sending the flight setting information to the user server via a short message;
sending the flight setting information to the user server via an email; or
sending the flight setting information to the user server via an instant messaging application.

Where functional modules are referred to in apparatus embodiments for carrying out various steps of the described method(s) it will be understood that these modules may be implemented in hardware, in software, or a combination of the two. When implemented in hardware, the modules may be implemented as one or more hardware modules, such as one or more application specific integrated circuits. When implemented in software, the modules may be implemented as one or more computer programs that are executed on one or more processors.

According to a fifth aspect of embodiments of the present disclosure, there is provided a device for flight notification, including:
a processor; and
a memory for storing instructions executable by the processor;
wherein the processor is configured to:
   receive flight setting information which includes a flight of a user and at least one contact of the user;
   monitor flight information corresponding to the flight of the user provided by an airline server;
   when the flight information indicates that there is a change in the flight of the user, generate a flight change notification according to change information in the flight information, wherein the flight change notification includes the change information; and
   send the flight change notification to the at least one contact of the user.

Optionally, the processor may be further configured to carry out the method for flight notification as described herein.

According to a sixth aspect of embodiments of the present disclosure, there provided a device for flight setting, including:
a processor; and
a memory for storing instructions executable by the processor;
wherein the processor is configured to:
   determine whether flight setting information is received, wherein the flight setting information includes a flight of a user and at least one contact of the user; and
   when determine that the flight setting information is received, send the flight setting information to a user server, so that the user server monitors flight information corresponding to the flight of the user provided by an airline server.

Optionally, the processor may be further configured to carry out the method for flight setting as described herein.

According to a seventh aspect of embodiments of the present disclosure, there is provided a computer program, which when executing on a processor, performs any one of the above methods.

The technical solutions provided by embodiments of the present disclosure may have the following advantageous effects:
In the present disclosure, a user server receives flight setting information which includes a flight of a user and at least one contact of the user, monitors flight information corresponding to the flight of the user provided by an airline server, when the flight information indicates that there is a change in the flight of the user, generates a flight change notification according to change information in the flight information; and sends the flight change notification to the at least one contact of the user. Thus, when there is a change in the flight of the user, the user server sends the flight change notification to the contact of the user on its own initiative, and thereby the user experience is improved.

In an embodiment of the present disclosure, in a case where a terminal of a user is turned off, the user server may automatically monitor flight information corresponding to a flight of the user via a connection with an airline server. Thus, the user experience is improved.

In an embodiment of the present disclosure, when the flight information indicates any abnormity with the flight of the user, the user server generates a flight change notification which includes information corresponding to the abnormity. Thus, when the contact of the user obtains the flight change notification, the contact of the user may timely know what abnormity the flight of the user encounters, and thereby the experience of the contact of the user is improved.

In an embodiment of the present disclosure, the user server may send the flight change notification to the contacts of the user via one or more communication manners. Thus, it is guaranteed that the contacts of the user can receive the flight change notification and timely obtain the change information in the flight change notification. Consequently, the experience of the contact of the user is improved.

In an embodiment of the present disclosure, when monitoring the flight information provided by the airline server, the user server may delete expired flight setting information. Thus, resource utilization is improved.

In an embodiment of the present disclosure, a user terminal may determine whether the flight setting information is received; when the flight setting information is received, the user terminal sends the flight setting information to the user server, so that the user server may monitor the flight information corresponding to the flight of the user provided by the airline server. Thus, even if the user terminal is turned off, the user server may monitor the flight information corresponding to the flight of the user provided by the airline server according to the flight setting information sent from the user terminal. If there is a change in the flight of the user, the user server may generate and send the flight change notification to the contact of the user on its own initiative. Consequently, user experience is further improved.

In an embodiment of the present disclosure, the user terminal may provide flight change notification templates. Thus, the efficiency for setting the flight setting information by the user is increased and user experience is improved.

In an embodiment of the present disclosure, the user terminal may send the flight setting information to the user server via one or more communication manners. Thus, it is guaranteed that the user server can receive the flight setting information.

It is to be understood that both the foregoing general description and the following detailed description are exemplary and explanatory only and are not restrictive of the present disclosure, as claimed.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
Fig. 1 is a flowchart showing a method for flight notification according to an exemplary embodiment of the present disclosure.
Fig. 2 is a flowchart showing another method for flight notification according to an exemplary embodiment of the present disclosure.
Fig. 3 is a flowchart showing another method for flight notification according to an exemplary embodiment of the present disclosure.
Fig. 4 is a flowchart showing a method for flight setting according to an exemplary embodiment of the present disclosure.
Fig. 5 is a flowchart showing another method for flight setting according to an exemplary embodiment of the present disclosure.
Fig. 6 is a schematic diagram showing a flight change notification template in another method for flight setting according to an exemplary embodiment of the present disclosure.
Fig. 7 is a block diagram showing a device for flight notification according to an exemplary embodiment of the present disclosure.
Fig. 8 is a block diagram showing another device for flight notification according to an exemplary embodiment of the present disclosure.
Fig. 9 is a block diagram showing another device for flight notification according to an exemplary embodiment of the present disclosure.
Fig. 10 is a block diagram showing another device for flight notification according to an exemplary embodiment of the present disclosure.
Fig. 11 is a block diagram showing another device for flight notification according to an exemplary embodiment of the present disclosure.
Fig. 12 is a block diagram showing a device for flight setting according to an exemplary embodiment of the present disclosure.
Fig. 13 is a block diagram showing another device for flight setting according to an exemplary embodiment of the present disclosure.
Fig. 14 is a block diagram showing a structure of a device for flight notification according to an exemplary embodiment of the present disclosure.
Fig. 15 is a block diagram showing a structure of a device for flight setting according to an exemplary embodiment of the present disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of devices and methods consistent with aspects related to the present disclosure as recited in the appended claims.

The terminology used in the description of the disclosure herein is for the purpose of describing particular examples only and is not intended to be limiting of the disclosure. As used in the description of the disclosure and the appended claims, the singular forms "a," "an," and "the" are intended to include the plural forms as well, unless the context clearly indicates otherwise. It will also be understood that the term "and/or" as used herein refers to and encompasses any and all possible combinations of one or more of the associated listed items.

It shall be appreciated that although the present disclosure uses terminologies "first", "second", and "third" and the like to describe various information, the information shall not be limited by these terminologies. Using these terminologies is only for distinguishing information of the same type. For example, without departing from the scope of the present disclosure, the first information may be referred to as the second information, and similarly, the second information may be referred to as the first information. Depending on the context, the terminology "if" used herein may be interpreted as "when" or "in response to determining that... ".

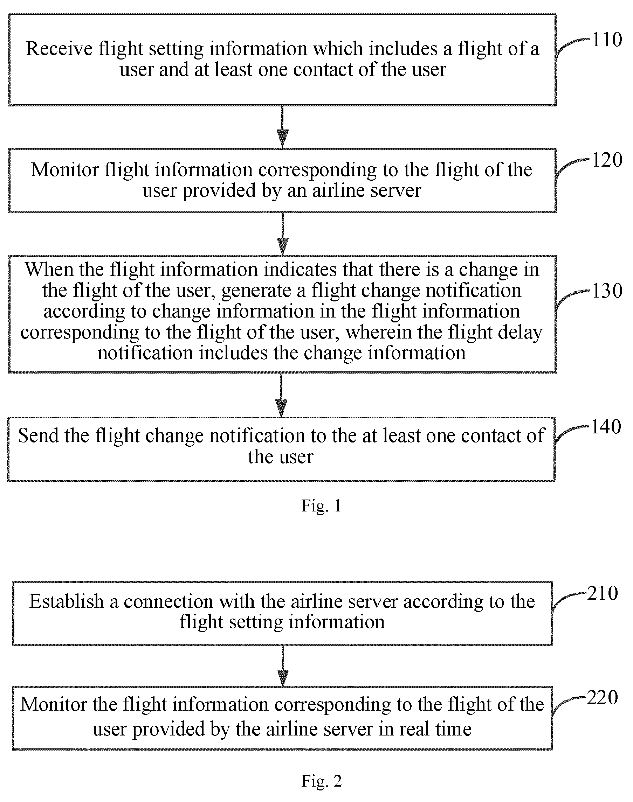

Fig. 1 is a flowchart showing a method for flight notification according to an exemplary embodiment of the present disclosure. The method may be applied in a user server and include the following steps:
In step 110, flight setting information is received. The flight setting information includes a flight of a user and at least one contact of the user.

In embodiments of the present disclosure, the flight setting information is set by a user, and a flight of a user may be a flight to be taken by a user which a user terminal is affiliated with, or may be a flight to be taken by other users. In an embodiment, a system may provide a template, the user may edit the template or not, so as to obtain the flight setting information. For example, the system may provide one or more templates, and the user may select one from the templates and edit the template correspondingly or not so as to obtain the flight setting information. There may be one or more contacts of the user, and the contact of the user may be an ordinary person who is going to pick up the user, or may be a family member or a friend. In addition, the flight setting information may further include information of the contact of the user, for example, a telephone number, an email address, a QQ number or a WeChat number, and the like.

Further, in addition to the flight of the user and the at least one contact of the user, the flight setting information may include user defined information.

For example, the user defined information is as follows: "I am Xiaoming, the flight changes and is estimated to arrive at about _. Please don't worry". The "_" is a placeholder. The purpose for reserving the placeholder in the user defined information is that after the user server obtains the changed time, the user server can fill the changed time to the position corresponding to the placeholder.

In step 120, flight information corresponding to the flight of the user provided by an airline server is monitored.

In embodiments of the present disclosure, the user server and the airline server may be not the same one. The airline server provides information of respective flights, for example, flight numbers, departure times, arrival times, and the like.

When the user server receives the flight setting information sent from the user terminal, the user server monitors the flight information corresponding to the flight of the user provided by the airline server according to the flight of the user in the flight setting information, for the purpose of determining whether there are some changes in the flight of the user.

In step 130, when the flight information indicates that there is a change in the flight of the user, a flight change notification is generated according to change information in the flight information corresponding to the flight of the user. The flight change notification includes the change information.

In embodiments of the present disclosure, the flight information corresponding to the flight of the user includes flight delay, flight malfunction, or flight landing at an airport other than a predetermined airport due to weather reasons. If the information occurs, it is needed to indicate that there is a change in the flight of the user, and the generated flight change notification includes the change information.

For example, if a flight is delayed, the change information may include the arrival time after the flight is delayed and the like.

As another example, if the flight needs to land at an airport other than a predetermined airport due to weather reasons, the change information may include a name of the airport where the flight is about to land and a landing time and the like.

In step 140, the flight change notification is sent to the at least one contact of the user.

In embodiments of the present disclosure, when flight information corresponding to the flight of the user indicates that there is a change in the flight of the user, the user server sends the flight change notification to respective contacts of the user on its own initiative, so that the respective contacts of the user may reasonably manage time according to the change information.

As can be seen from the above embodiments, the user server receives flight setting information which includes a flight of a user and at least one contact of the user, monitors flight information corresponding to the flight of the user provided by an airline server, when the flight information indicates that there is a change in the flight of the user, generates a flight change notification according to change information in the flight information, and the flight change notification includes the change information; and sends the flight change notification to the at least one contact of the user. Thus, when there is a change in the flight of the user, the user server sends the flight change notification to the contact of the user on its own initiative, and thereby user experience is improved.

In a disclosed embodiment, the monitoring flight information corresponding to the flight of the user provided by the airline server in step 120 may include the following steps, as shown in Fig. 2:
In step 210, a connection with the airline server is established according to the flight setting information.

In embodiments of the present disclosure, the user server and the airline server may not be the same one. The airline server provides information of respective flights, for example, flight numbers, departure times, arrival times or changed arrival times. If it is desired to monitor the flight information provided by the airline server, a connection with the airline server needs to be established.

In step 220, the flight information corresponding to the flight of the user provided by the airline server is monitored in real time.

In embodiments of the present disclosure, the flight information corresponding to the flight of the user provided by the airline server is monitored in real time, for the purpose of determining whether there is a change in the flight of the user. If there is a change, it is needed to generate the flight change notification; if there is no change, it is not needed to generate the flight change notification.

As can be seen from the above embodiment, the user server can automatically monitor the flight information corresponding to the flight of the user via the connection with the airline server. Thus, user experience is improved.

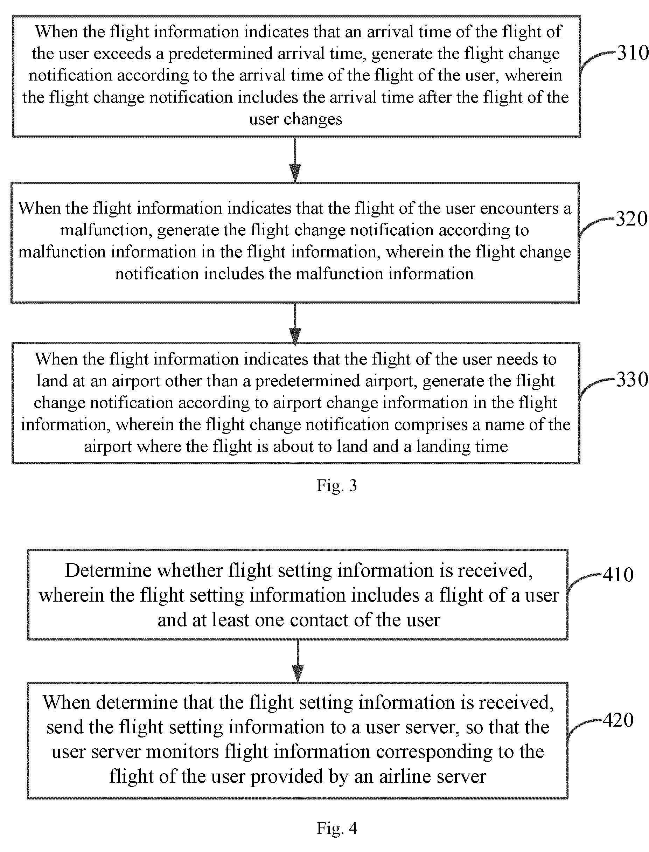

In another disclosed embodiment, the generating the flight change notification according to change information in the flight information when the flight information indicates that there is a change in the flight of the user in step 130 may include the following steps, as shown in Fig. 3:
In step 310, when the flight information indicates that an arrival time of the flight of the user exceeds a predetermined arrival time, the flight change notification is generated according to the arrival time of the flight of the user. The flight change notification includes the arrival time after the flight of the user changes.

In step 320, when the flight information indicates that the flight of the user encounters a malfunction, the flight change notification is generated according to malfunction information in the flight information. The flight change notification includes the malfunction information.

In step 330, when the flight information indicates that the flight of the user needs to land at an airport other than a predetermined airport, the flight change notification is generated according to requirement information in the flight information. The flight change notification includes a name of the airport where the flight is about to land and a landing time.

The steps 310, 320 and 330 are not restricted to be performed in the above sequence, but may be performed simultaneously or not.

For example, if a flight encounters a malfunction and needs to land at an airport other than the predetermined airport, and the time when arriving at the airport far exceeds the predetermined arrival time for arriving at the predetermined airport, the flight change notification may include, for example, the malfunction information, the name of the airport where the flight is about to land and the landing time, and the like.

As another example, if the flight encounters a malfunction and the arrival time far exceeds the predetermined arrival time, the flight change information may include, for example, the malfunction information, the arrival time after the flight of the user changes, and the like.

As can be seen from the above embodiments, when the flight information indicates any abnormity with the flight of the user, the generated flight change notification includes information corresponding to the abnormity. Thus, even when the terminal of the user is turned off and thus cannot conveniently or timely notify the contact of the user, the contact of the user may timely know what change or abnormity the flight of the user encounters, and thereby the experience of the contact of the user is improved.

In another disclosed embodiment, the received flight setting information may further include a placeholder. Thus, the generating the flight change notification according to the change information in the flight information in step 130 may be further implemented by:
filling the placeholder in the flight setting information correspondingly according to the monitored change information in the flight information to generate the flight change notification.

In another disclosed embodiment, the sending the flight change notification to each of the at least one contact of the user in step 140 may include at least one of the following sending manner:
In a first manner, the flight change notification is sent to each of the at least one contact of the user via a short message.

In a second manner, the flight change notification is sent to each of the at least one contact of the user via an email.

In a third manner, the flight change notification is sent to each of the at least one contact of the user via an instant messaging application.

The instant messaging manner may include various manners such as WeChat, QQ, and MiTalk, and the like.

As can be seen from the above embodiments, the user server may send the flight change notification to the contact of the user via one or more communication manners. Thus, it is guaranteed that the contact of the user can receive the flight change notification and timely obtain the change information in the flight change notification. Consequently, the experience of the contact of the user is improved.

In another disclosed embodiment, after performing the monitoring the flight information corresponding to the flight of the user provided by the airline server in step 120, the method may further include:
when the flight information corresponding to the flight of the user indicates that there is no change in the flight of the user, deleting the flight setting information.

For example, if the flight of the user arrives on time, the flight setting information set by the user may be deleted without being sent to the contact of the user.

As can be seen from the above embodiments, when monitoring the flight information provided by the airline server, the user server may delete expired flight setting information. Thus, resource utilization is improved.

However, the present disclosure is not limited to this. In an embodiment, a user may set a flight change notification which needs to be sent when the flight information changes and a flight notification which is needed when there is no change in the flight information. When the flight information changes, the user server automatically sends the flight change notification to respective contacts of the user on its own initiative, so that respective contacts of the user may timely know the change status of the flight of the user. Thus, user experience is improved. When there is no change in the flight information, the user server may send the flight notification to the respective contacts of the user on its own initiative. Thus, user experience is improved.

Fig. 4 is a flowchart showing a method for flight setting according to an exemplary embodiment of the present disclosure. The method may be applied in a user terminal which may be a smart phone of various types, a tablet computer, a personal computer and the like.

The method may include the following steps:
In step 410, whether flight setting information is received is determined. The flight setting information includes a flight of a user and at least one contact of the user.

In embodiments of the present disclosure, the flight setting information is set by a user, and a flight of a user may be a flight to be taken by a user which a user terminal is affiliated with, or may be a flight to be taken by other users. There may be one or more contacts of the user, and the contact of the user may be an ordinary person who is going to pick up the user, or may be a family member or a friend. In addition, the flight setting information may further include information of the contact of the user, for example, a telephone number, an email address, a QQ number, and the like.

Further, in addition to the flight of the user and the at least one contact of the user, the flight setting information may include user defined information.

For example, the user defined information is as follows: "I am Xiaoming, the flight is delayed and estimated to depart at about _. Please don't worry". The "_" is a placeholder. The purpose for reserving the placeholder in the user defined information is that after the user server obtains the changed time, the user server can fill the changed time to the position corresponding to the placeholder.

In step 420, when it is determined that the flight setting information is received, the flight setting information is sent to a user server, so that the user server monitors flight information corresponding to the flight of the user provided by an airline server.

As can be seen from the above embodiments, whether flight setting information is received is determined, and when the flight setting information is received, the flight setting information is sent to the user server, so that the user server monitors the flight information corresponding to the flight of the user provided by the airline server. Thus, the user server may monitor the flight information corresponding to the flight of the user provided by the airline server according to the flight setting information sent from a terminal device, generate the flight change notification when there is a change in the flight of the user, and send the flight change notification to the contact of the user on its own initiative. Consequently, the user experience is improved.

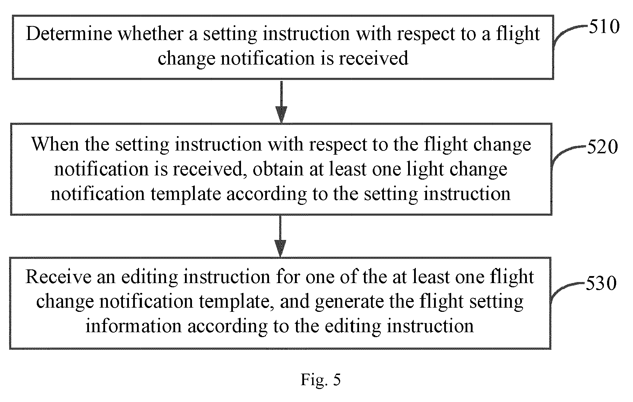

In an optional implementation, the determining whether the flight setting information is received in step 410 may include the following steps, as shown in Fig. 5:
In step 510, whether a setting instruction with respect to a flight change notification is received is determined.
In step 520, when the setting instruction with respect to the flight change notification is received, at least one flight change notification template is obtained according to the setting instruction.
In step 530, an editing instruction for one of the at least one flight change notification template is received, and the flight setting information is generated according to the editing instruction.

The flight change notification template may include a reserved placeholder in which flight information corresponding to the flight of the user is to be filled.

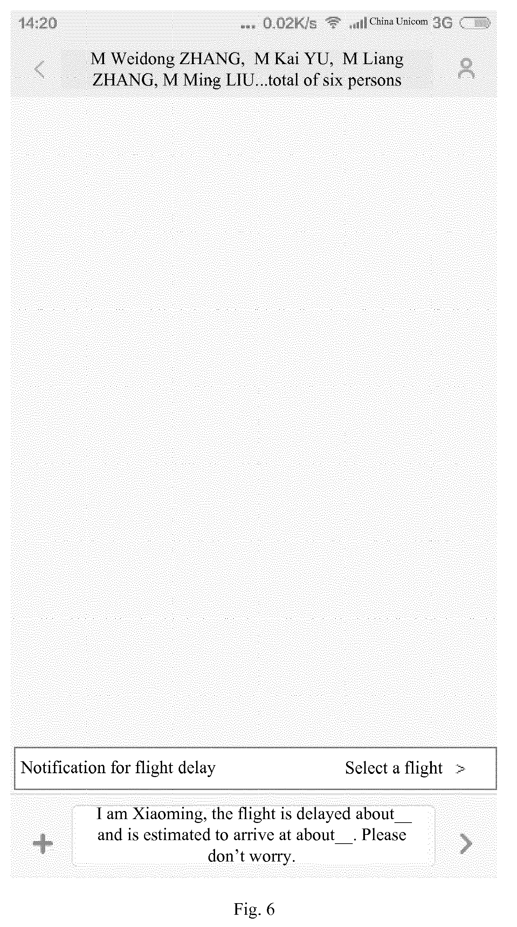

For example, the flight change notification template as shown in Fig. 6 includes a reserved placeholder. As shown in Fig. 6, the template is as follows: "I am Xiaoming, the flight changes and is estimated to arrive at about _. Please don't worry". The "_" is a placeholder. The purpose for reserving the placeholder is that after the user server obtains the changed time, the user server can fill the changed time to the position corresponding to the placeholder.

A user may find a flight change setting function from short messages in a mobile phone, select the flight to be taken, and set the contact information of the person who is going to pick up the user or a family member or a friend if the flight changes. After customization is completed, the user submits the flight setting information onto a server.

As can be seen from the above embodiment, the user terminal may provide flight change notification template, and thus the efficiency for setting the flight setting information by the user is increased and user experience is improved.

In another optional implementation, the sending the flight setting information to the user server in step 420 may include at least one of the following send manners:
In a first manner, the flight setting information is to the user server via a short message.
In a second manner, the flight setting information is sent to the user server via an email.
In a third manner, the flight setting information is sent to the user server via an instant messaging application.

The instant messaging application may include WeChat, QQ, MiTalk and the like.

As can be seen from the above embodiment, the flight setting information may be sent to the user server via one or more communication manners. Thus, it is guaranteed that the user server can receive the flight setting information.

Corresponding to the above embodiments of the method for flight notification and the above embodiments of the method for flight setting, the present disclosure further provides embodiments of a device for flight notification and embodiments of a device for flight setting.

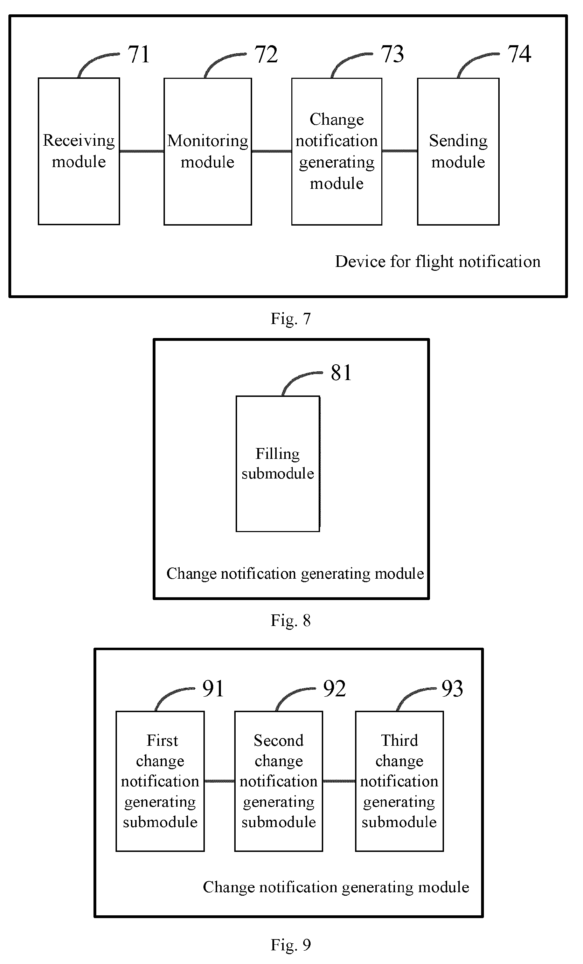

Fig. 7 is a block diagram showing a device for flight notification according to an exemplary embodiment of the present disclosure. The device is applied in a user server and configured to perform the method for flight notification as shown in Fig. 1. The device includes a receiving module 71, a monitoring module 72, a change notification generating module 73 and a sending module 74.

The receiving module 71 is configured to receive flight setting information which includes a flight of a user and at least one contact of the user.

The monitoring module 72 is configured to monitor flight information corresponding to the flight of the user provided by an airline server.

The change notification generating module 73 is configured to, when the flight information indicates that there is a change in the flight of the user, generate a flight change notification according to change information in the flight information, wherein the flight change notification includes the change information.

The sending module 74 is configured to send the flight change notification to the at least one contact of the user.

As can be seen from the above embodiment, flight setting information which includes a flight of a user and at least one contact of the user is received; flight information corresponding to the flight of the user provided by an airline server is monitored; when the flight information indicates that there is a change in the flight of the user, a flight change notification is generated according to change information in the flight information, and the flight change notification includes the change information; and the flight change notification sent to the at least one contact of the user. Thus, when there is a change in the flight of the user, the user server sends the flight change notification to the contact of the user on its own initiative, and thereby user experience is improved.

Fig. 8 is a block diagram showing another device for flight notification according to an exemplary embodiment of the present disclosure. On the basis of the embodiment shown in Fig. 7, the flight setting information in the embodiment further includes a placeholder. The change notification generating module 73 may include a filling submodule 81.

The filling submodule 81 is configured to fill the placeholder in the flight setting information correspondingly according to the change information in the flight information to generate the flight change notification.

Fig. 9 is a block diagram showing another device for flight notification according to an exemplary embodiment of the present disclosure. On the basis of the embodiment shown in Fig. 7, the change notification generating module 73 in the embodiment may include a first change notification generating submodule 91, or a second change notification generating submodule 92, or a third change notification generating submodule 93.

The first change notification generating submodule 91 is configured to, when the flight information indicates that an arrival time of the flight of the user exceeds a predetermined arrival time, generate the flight change notification according to the arrival time of the flight of the user, wherein the flight change notification includes the arrival time after the flight of the user changes.

The second change notification generating submodule 92 is configured to, when the flight information indicates that the flight of the user encounters a malfunction, generate the flight change notification according to malfunction information in the flight information, wherein the flight change notification includes the malfunction information.

The third change notification generating submodule 93 is configured to, when the flight information indicates that the flight of the user needs to land at an airport other than a predetermined airport, generate the flight change notification according to airport change information in the flight information, wherein the flight change notification includes a name of the airport where the flight is about to land and a landing time.

As can be seen from the above embodiment, when the flight information indicates any abnormity with the flight of the user, the user server generates a flight change notification which includes information corresponding to the abnormity. Thus, when the contact of the user obtains the flight change notification, the contact of the user may timely know what abnormity the flight of the user encounters, and thereby the experience of the contact of the user is improved.

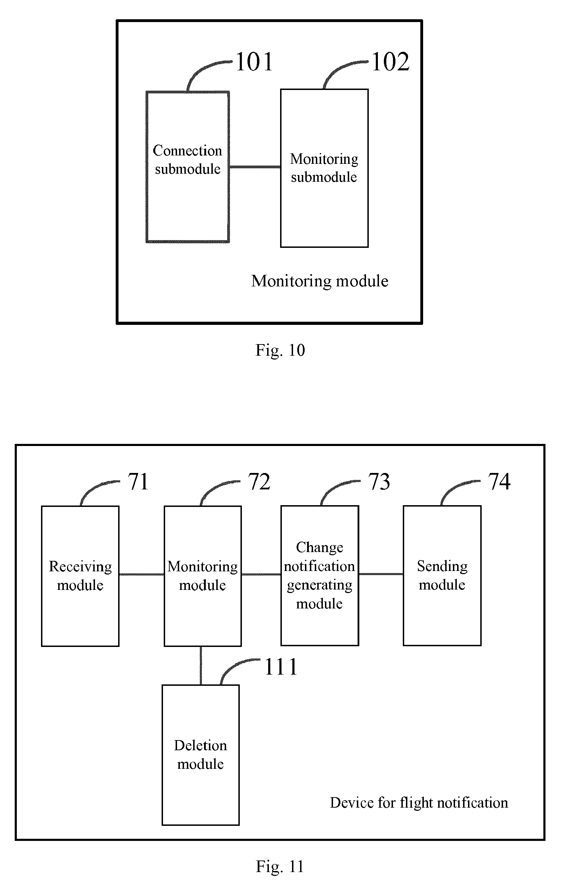

Fig. 10 is a block diagram showing another device for flight notification according to an exemplary embodiment of the present disclosure. On the basis of the embodiment shown in Fig. 7, the monitoring module 72 in the embodiment may include a connection submodule 101 and a monitoring submodule 102.

The connection submodule 101 is configured to establish a connection with the airline server according to the flight setting information.

The monitoring submodule 102 is configured to monitor the flight information corresponding to the flight of the user provided by the airline server in real time.

As can be seen from the above embodiment, in a case where a terminal of a user is turned off, a user server may automatically monitor the flight information corresponding to a flight of the user via a connection with an airline server. Thus, user experience is improved.

In another disclosed embodiment, the sending module 74 employs at least one of the following sending manners:
sending the flight change notification to each of the at least one contact of the user via a short message;
sending the flight change notification to each of the at least one contact of the user via an email; or
sending the flight change notification to each of the at least one contact of the user via an instant messaging application.

As can be seen from the above embodiment, the user server may send the flight change notification to the contacts of the user via one or more communication manners. Thus, it is guaranteed that the contacts of the user can receive the flight change notification and timely obtain the change information in the flight change notification. Consequently, the experience of the contact of the user is improved.

Fig. 11 is a block diagram showing a device for flight notification according to an exemplary embodiment of the present disclosure. On the basis of the embodiment shown in Fig. 7, the device in the embodiment may further include a deletion module 111.

The deletion module 111 is configured to, when the flight information indicates that there is no change in the flight of the user, delete the flight setting information.

As can be seen from the above embodiment, when monitoring the flight information provided by the airline server, the user server may delete expired flight setting information. Thus, resource utilization is improved.

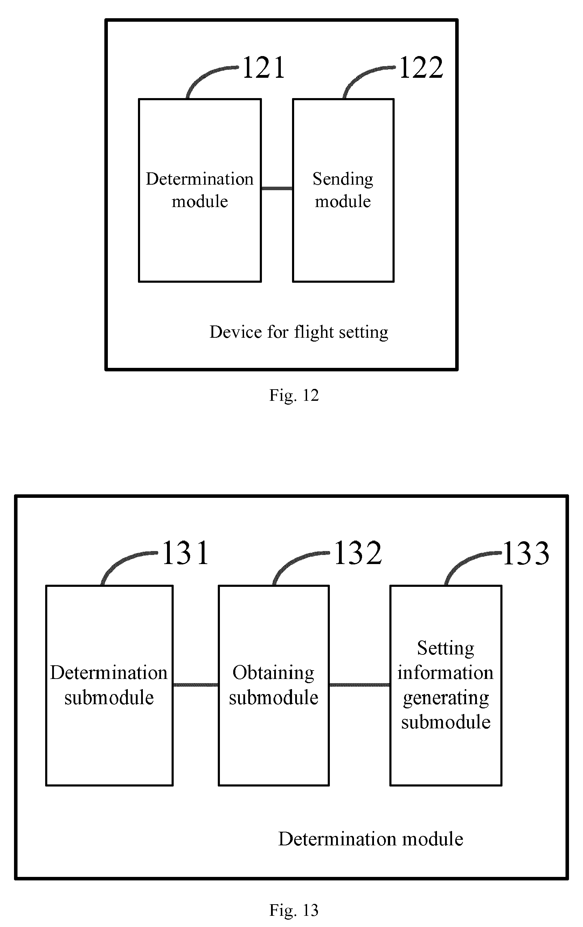

Fig. 12 is a block diagram showing a device for flight setting according to an exemplary embodiment of the present disclosure. The embodiment is configured on a user terminal, and may include a determination module 121 and a sending module 122.

The determination module 121 is configured to determine whether flight setting information is received, wherein the flight setting information includes a flight of a user and at least one contact of the user.

The sending module 122 is configured to, when it is determined that the flight setting information is received, send the flight setting information to a user server, so that the user server monitors flight information corresponding to the flight of the user provided by an airline server.

As can be seen from the above embodiment, whether the flight setting information is received is determined; when the flight setting information is received, the flight setting information is sent to the user server, so that the user server may monitor the flight information corresponding to the flight of the user provided by the airline server. Thus, even if the user terminal is turned off, the user server may monitor the flight information corresponding to the flight of the user provided by the airline server according to the flight setting information sent from the user terminal. If there is a change in the flight of the user, the user server may generate and send the flight change notification to the contact of the user on its own initiative. Consequently, user experience is further improved.

Fig. 13 is a block diagram showing another device for flight change setting according to an exemplary embodiment of the present disclosure. On the basis of the embodiment shown in Fig. 12, the determination module 121 in the embodiment includes a determination submodule 131, an obtaining submodule 132 and a setting information generating submodule 133.

The determination submodule 131 is configured to determine whether a setting instruction with respect to a flight change notification is received.

The obtaining submodule 132 is configured to, when the setting instruction with respect to the flight change notification is received, obtain at least one flight change notification template according to the setting instruction.

The setting information generating submodule 133 is configured to receive an editing instruction for one of the at least one flight change notification template, and generate the flight setting information according to the editing instruction.

The flight change notification template includes a reserved placeholder in which flight information corresponding to the flight of the user is to be filled.

As can be seen from the above embodiment, the user terminal may provide flight change notification templates. Thus, the efficiency for setting the flight setting information by the user is increased and user experience is improved.

Optionally, the sending module 122 may employ at least one of the following sending manners:
sending the flight setting information to the user server via a short message;
sending the flight setting information to the user server via an email; or
sending the flight setting information to the user server via an instant messaging application.

As can be seen from the above embodiment, the flight setting information may be sent to the user server via one or more communication manners. Thus, it is guaranteed that the user server can receive the flight setting information.

Corresponding to Fig. 7, the present disclosure further provides another device for flight notification, applied in a user server and including:
a processor; and
a memory for storing instructions executable by the processor;
wherein the processor is configured to:
   receive flight setting information which includes a flight of a user and at least one contact of the user;
   monitor flight information corresponding to the flight of the user provided by an airline server;
   when the flight information indicates that there is a change in the flight of the user, generate a flight change notification according to change information in the flight information, wherein the flight change notification includes the change information; and
   send the flight change notification to the at least one contact of the user.

Corresponding to Fig. 11, the present disclosure further provides another device for flight setting, applied in a user terminal and including:
a processor; and
a memory for storing instructions executable by the processor;
wherein the processor is configured to:
   determine whether flight setting information is received, wherein the flight setting information includes a flight of a user and at least one contact of the user; and
   when determine that the flight setting information is received, send the flight setting information to a user server, so that the user server monitors flight information corresponding to the flight of the user provided by an airline server.

With respect to the devices in the above embodiments, the specific manners for performing operations for individual modules therein have been described in detail in the embodiments regarding the methods, which will not be elaborated herein

The embodiments of devices basically correspond to the embodiments of methods, and thus for related portions, the description about the embodiments of methods may be referred to. The above described embodiments of devices are only illustrative, and portions described as separated units may be or may not be physically separated, and the portions shown as respective units may be or may not be physical units, i.e., the portions may be located at one place, or may be distributed over a plurality of network units. Apart or whole of the modules may be selected to realize the objectives of the technical solutions of the present disclosure according to actual requirements. One of ordinary skill in this art may understand and practice the technical solutions of the present disclosure without creative work.

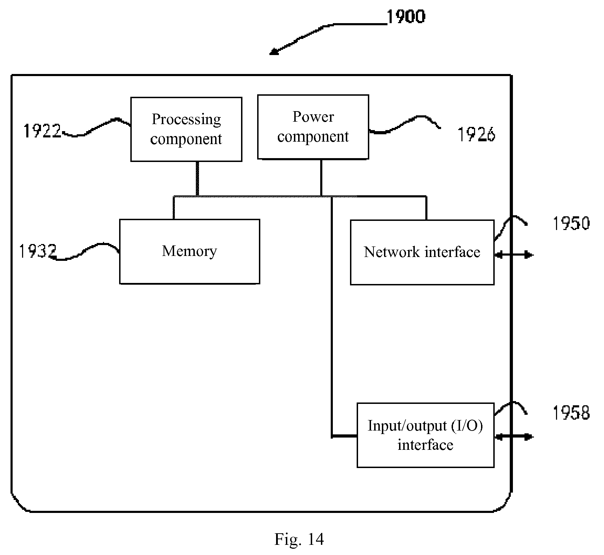

Fig. 14 is a block diagram showing a structure (at a user server side) of a device 1900 for flight notification according to an exemplary embodiment. For example, the device 1900 includes a processing component 1922 that further includes one or more processors, and memory resources represented by a memory 1932 for storing instructions executable by the processing component 1922, such as application programs. The application programs stored in the memory 1932 may include one or more modules each corresponding to a set of instructions. Further, the processing component 1922 is configured to execute the instructions.

The device 1900 may also include a power component 1926 configured to perform power management of the device 1900, wired or wireless network interface(s) 1950 configured to connect the device 1900 to a network, and an input/output (I/O) interface 1958. The device 1900 may operate based on an operating system stored in the memory 1932, such as Windows Server™, Mac OS X™, Unix™, Linux™, FreeBSD™, or the like.

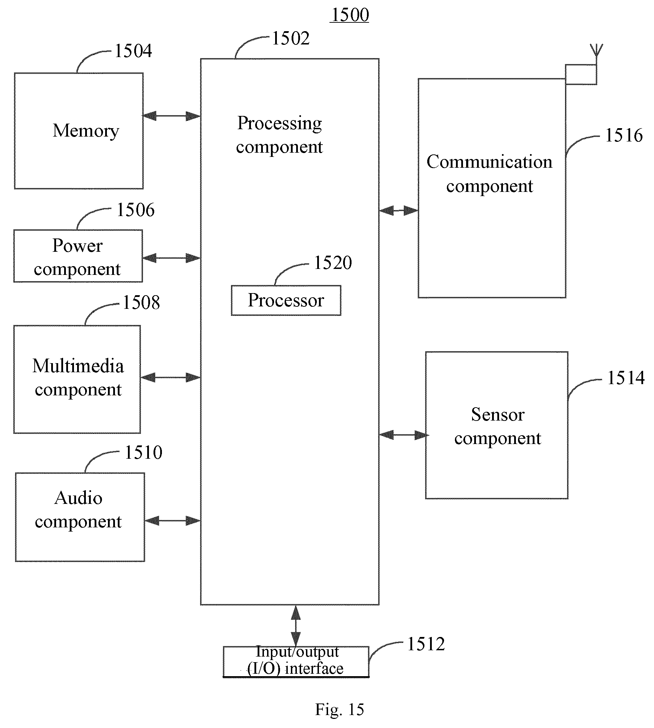

Fig. 15 is a block diagram showing a structure (at a user terminal side) of a device 1500 for flight setting according to an exemplary embodiment of the present disclosure. For example, the device 1500 may be a mobile phone having routing function, a computer, a digital broadcast terminal, a messaging device, a gaming console, a tablet, a medical device, exercise equipment, a personal digital assistant, and the like.

Referring to Fig. 15, the device 1500 may include one or more of the following components: a processing component 1502, a memory 1504, a power component 1506, a multimedia component 1508, an audio component 1510, an input/output (I/O) interface 1512, a sensor component 1514, and a communication component 1516.

The processing component 1502 typically controls overall operations of the device 1500, such as the operations associated with display, telephone calls, data communications, camera operations, and recording operations. The processing component 1502 may include one or more processors 1520 to execute instructions to perform all or part of the steps in the above described methods. Moreover, the processing component 1502 may include one or more modules which facilitate the interaction between the processing component 1502 and other components. For instance, the processing component 1502 may include a multimedia module to facilitate the interaction between the multimedia component 1508 and the processing component 1502.

The memory 1504 is configured to store various types of data to support the operation of the device 1500. Examples of such data include instructions for any applications or methods operated on the device 1500, contact data, phonebook data, messages, pictures, video, etc. The memory 1504 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1506 provides power to various components of the device 1500. The power component 1506 may include a power management system, one or more power sources, and any other components associated with the generation, management, and distribution of power in the device 1500.

The multimedia component 1508 includes a screen providing an output interface between the device 1500 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1508 includes a front camera and/or a rear camera. The front camera and the rear camera may receive an external multimedia datum while the device 1500 is in an operation mode, such as a photographing mode or a video mode. Each of the front camera and the rear camera may be a fixed optical lens system or have focus and optical zoom capability.

The audio component 1510 is configured to output and/or input audio signals. For example, the audio component 1510 includes a microphone ("MIC") configured to receive an external audio signal when the device 1500 is in an operation mode, such as a call mode, a recording mode, and a voice recognition mode. The received audio signal may be further stored in the memory 1504 or transmitted via the communication component 1516. In some embodiments, the audio component 1510 further includes a speaker to output audio signals.

The I/O interface 1512 provides an interface between the processing component 1502 and peripheral interface modules, such as a keyboard, a click wheel, buttons, and the like. The buttons may include, but are not limited to, a home button, a volume button, a starting button, and a locking button.

The sensor component 1514 includes one or more sensors to provide status assessments of various aspects of the device 1500. For instance, the sensor component 1514 may detect an open/closed status of the device 1500, relative positioning of components, e.g., the display and the keypad, of the device 1500, a change in position of the device 1500 or a component of the device 1500, a presence or absence of user contact with the device 1500, an orientation or an acceleration/deceleration of the device 1500, and a change in temperature of the device 1500. The sensor component 1514 may include a proximity sensor configured to detect the presence of nearby objects without any physical contact. The sensor component 1514 may also include a light sensor, such as a CMOS or CCD image sensor, for use in imaging applications. In some embodiments, the sensor component 1514 may also include an accelerometer sensor, a gyroscope sensor, a magnetic sensor, a pressure sensor, a microwave sensor, or a temperature sensor.

The communication component 1516 is configured to facilitate communication, wired or wirelessly, between the device 1500 and other devices. The device 1500 can access a wireless network based on a communication standard, such as WiFi, 2G, or 3G, or a combination thereof. In one exemplary embodiment, the communication component 1516 receives a broadcast signal or broadcast associated information from an external broadcast management system via a broadcast channel. In one exemplary embodiment, the communication component 1516 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 1500 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 1504, executable by the processor 1520 in the device 1500, for performing the above-described methods. For example, the non-transitory computer-readable storage medium may be a ROM, a RAM, a CD-ROM, a magnetic tape, a floppy disc, an optical data storage device, and the like.

## Claims

1. A method for flight notification, comprising:
receiving (110) flight setting information which comprises a flight of a user and at least one contact of the user;
monitoring (120) flight information corresponding to the flight of the user provided by an airline server;
upon the flight information indicating that there is a change in the flight of the user, generating (130) a flight change notification according to a change in information of the flight information, wherein the flight change notification comprises the change in information; and
sending (140) the flight change notification to the at least one contact of the user.

2. The method according to claim 1, wherein the flight setting information further comprises a placeholder;
wherein the step of generating (130) the flight change notification according to the change in information of the flight information comprises:
filling the placeholder in the flight setting information correspondingly according to the change in information of the flight information to generate the flight change notification.

3. The method according to claim 1 or 2, wherein upon the flight information indicating that there is a change in the flight of the user, the step of generating (130) the flight change notification according to the change in information of the flight information, comprises:
upon the flight information indicating that an arrival time of the flight of the user exceeds a predetermined arrival time, generating (310) the flight change notification according to the arrival time of the flight of the user, wherein the flight change notification comprises the changed arrival time; or
upon the flight information indicating that the flight of the user encounters a malfunction, generating (320) the flight change notification according to malfunction information in the flight information, wherein the flight change notification comprises the malfunction information; or
upon the flight information indicating that the flight of the user needs to land at an airport other than a predetermined airport, generating (330) the flight change notification according to airport change information in the flight information, wherein the flight change notification comprises a name of the airport where the flight is about to land and a landing time.

4. A method for flight setting, comprising:
determining (410) whether flight setting information is received, wherein the flight setting information comprises a flight of a user and at least one contact of the user; and
upon determining that the flight setting information is received, sending (420) the flight setting information to a user server, so that the user server monitors flight information corresponding to the flight of the user provided by an airline server.

5. The method according to claim 4, wherein the step of determining (410) whether the flight setting information is received comprises:
determining (510) whether a setting instruction with respect to a flight change notification is received;
upon the setting instruction with respect to the flight change notification being received, obtaining (520) at least one flight change notification template according to the setting instruction; and
receiving (530) an editing instruction for the or each flight change notification template, and generating the flight setting information according to the editing instruction.

6. The method according to claim 5, wherein the or each flight change notification template comprises a reserved placeholder in which flight information corresponding to the flight of the user is to be filled.

7. A device for flight notification, comprising:
a receiving module (71) configured to receive flight setting information which comprises a flight of a user and at least one contact of the user;
a monitoring module (72) configured to monitor flight information corresponding to the flight of the user provided by an airline server;
a change notification generating module (73) configured to, upon the flight information indicating that there is a change in the flight of the user, generate a flight change notification according to change information in the flight information, wherein the flight change notification comprises the change information; and
a sending module (74) configured to send the flight change notification to the at least one contact of the user.

8. The device according to claim 7, wherein the flight setting information further comprises a placeholder;
wherein the change notification generating module (73) comprises:
a filling submodule (81) configured to fill the placeholder in the flight setting information correspondingly according to the change information in the flight information to generate the flight change notification.

9. The device according to claim 7 or 8, wherein the change notification generating module (73) comprises:
a first change notification generating submodule (91) configured to, upon the flight information indicating that an arrival time of the flight of the user exceeds a predetermined arrival time, generate the flight change notification according to the arrival time of the flight of the user, wherein the flight change notification comprises the changed arrival time; or
a second change notification generating submodule (92) configured to, upon the flight information indicating that the flight of the user encounters a malfunction, generate the flight change notification according to malfunction information in the flight information, wherein the flight change notification comprises the malfunction information; or
a third change notification generating submodule (93) configured to, upon the flight information indicating that the flight of the user needs to land at an airport other than a predetermined airport, generate the flight change notification according to airport change information in the flight information, wherein the flight change notification comprises a name of the airport where the flight is about to land and a landing time.

10. The device according to claim 7, 8 or 9, further comprising:
a deletion module (111) configured to, when the flight information indicates that there is no change in the flight of the user, delete the flight setting information.

11. A device for flight setting, comprising:
a determination module (121) configured to determine whether flight setting information is received, wherein the flight setting information comprises a flight of a user and at least one contact of the user; and
a sending module (122) configured to, upon determining that the flight setting information is received, send the flight setting information to a user server, so that the user server monitors flight information corresponding to the flight of the user provided by an airline server.

12. The device according to claim 11, wherein the determination module (121) comprises:
a determination submodule (131) configured to determine whether a setting instruction with respect to a flight change notification is received;
an obtaining submodule (132) configured to, upon the setting instruction with respect to the flight change notification being received, obtain at least one flight change notification template according to the setting instruction; and
a setting information generating submodule (133) configured to receive an editing instruction for the or each flight change notification template, and generate the flight setting information according to the editing instruction.

13. The device according to claim 12, wherein the or each flight change notification template comprises a reserved placeholder in which flight information corresponding to the flight of the user is to be filled.

14. A device for flight notification, comprising:
a processor; and
a memory for storing instructions executable by the processor;
wherein the processor is configured to carry out the method of any of claims 1 to 3.

15. A device for flight setting, comprising:
a processor; and
a memory for storing instructions executable by the processor;
wherein the processor is configured to carry out the method of any of claims 4 to 6.
